# EUROPEAN PATENT SPECIFICATION

(11) **EP 1 868 311 B1**
(45) Date of publication and mention of the grant of the patent: **01.02.2012**
(21) Application number: 06012403.9
(22) Date of filing: 16.06.2006
(51) Int. Cl.: H04L 1/18

(54) **Avoidance of retransmission requests in a packet retransmission scheme**
Vermeidung von Übertragungswiederholungsanfragen in einem Übertragungswiederholungsschema
Évitement des demandes de retransmission dans un schéma de retransmission de paquets

(43) Date of publication of application: 19.12.2007
(73) Proprietor: Panasonic Corporation, Kadoma-shi Osaka 571-8501 (JP)
(72) Inventor: Löhr, Joachim, 63225 Langen (DE); Aoyama, Takahisa, c/o Matsushita El. Ind. Co., Ltd, 1-3-7, Shiromi, Chuo-ku (JP); Feuersänger, Martin, c/o Panasonic, 63225 Langen (DE)
(74) Representative: Grünecker, Kinkeldey, Stockmair & Schwanhäusser

(56) References cited:
- WO-A-00/60799
- US-B1- 6 760 860

## Description

### FIELD OF THE INVENTION

The invention relates to a method for avoiding retransmission requests for missing service data units in a mobile communication system, wherein service data units are transmitted in form of protocol data units by a protocol layer providing a packet retransmission scheme. The invention provides different methods the steps of which are executed by a mobile terminal or a base station, respectively. Moreover, the invention also relates to a mobile terminal and a base station performing the methods for avoiding retransmission requests for missing service data units in a mobile communication system.

### TECHNICAL BACKGROUND

### Long Term Evolution (LTE)

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

However, knowing that user and operator requirements and expectations will continue to evolve, the 3GPP has begun considering the next major step or evolution of the 3G standard to ensure the long-term competitiveness of 3G. The 3GPP launched a Study Item "Evolved UTRA and UTRAN" (E-UTRA and E- UTRAN). The study will investigate means of achieving major leaps in performance in order to improve service provisioning and reduce user and operator costs.

It is generally assumed that there will be a convergence toward the use of Internet Protocols (IP), and all future services will be carried on top of IP. Therefore, the focus of the evolution is on enhancements to the packet-switched (PS) domain.

The main objectives of the evolution are to further improve service provisioning and reduce user and operator costs as already mentioned.

More specifically, some key performance and capability targets for the long-term evolution are:
■ Significantly higher data rates compared to HSDPA and HSUPA: envisioned target peak data rates of more than 100Mbps over the downlink and 50Mbps over the uplink
■ Improved coverage: high data rates with wide-area coverage
■ Significantly reduced latency in the user plane in the interest of improving the performance of higher layer protocols (for example, TCP) as well as reducing the delay associated with control plane procedures (for instance, session setup)
■ Greater system capacity: threefold capacity compared to current standards.

Another key requirement of the long-term evolution is to allow for a smooth migration to these technologies.

### General Overview of the OSI layer

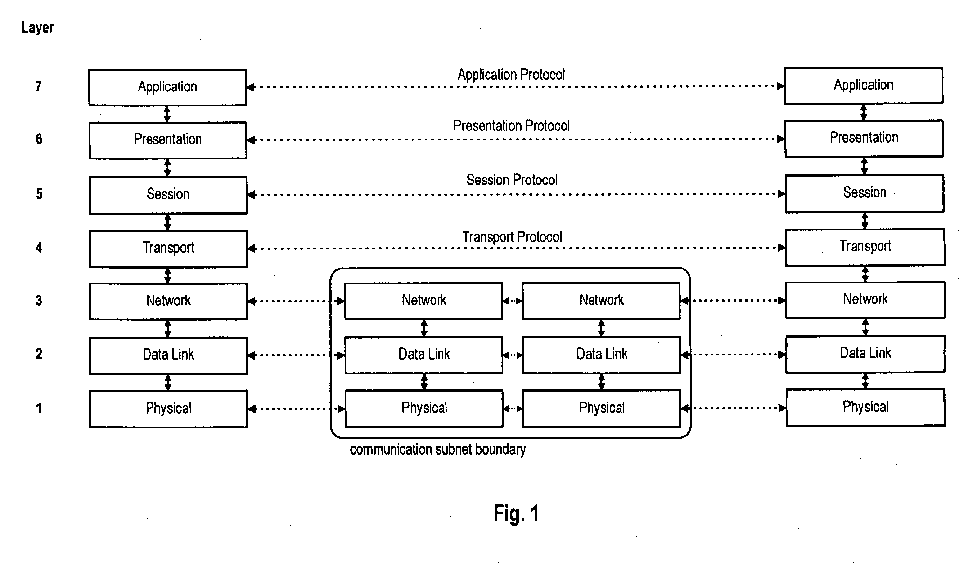

Fig. 1 provides a brief overview on the OSI model on which the further discussion of the LTE architecture is based and based on which also the invention will be discussed herein.

The Open Systems Interconnection Reference Model (OSI Model or OSI Reference Model) is a layered abstract description for communications and computer network protocol design. The OSI model divides the functions of a system into a series of layers. Each layer has the property that it only uses the functions of the layer below, and only exports functionality to the layer above. A system that implements protocol behavior consisting of a series of these layers is known as a 'protocol stack' or 'stack'. Its main feature is in the junction between layers which dictates the specifications on how one layer interacts with another. This means that a layer written by one manufacturer can operate with a layer from another. For our purpose, only the first three layers will be described in more detail below.

The physical layer or layer 1 main purpose is the transfert of information (bits) over a specific physical medium (e.g. coaxial cables, twisted pairs, optical fibers, air interface, etc.). It converts or modulates data into signals (or symbols) that are transmitted over a communication channel.

The purpose of the data link layer (or Layer 2) is to shape the information flow in a way compatible with the specific physical layer by breaking up the input data into data frames (Segmentation And Re-assembly (SAR) functions). Furthermore it may detect and correct potential transmission errors by requesting a retransmission of a lost frame. It typically provides an addressing mechanism and may offer flow control algorithms in order to align the data rate with the receiver capacity. If a shared medium is concurently used by multiple transmitters and receivers, the data link layer typically offers mechanisms to regulate and control access to the physical medium.

As there are numerous functions offered by the data link layer, the data link layer is often subdivided into sublayers (e.g. RLC and MAC sublayers in UMTS). Typical examples of Layer 2 protocols are PPP/HDLC, ATM, frame relay for fixed line networks and RLC, LLC or MAC for wireless systems.

The network layer or Layer 3 provides the functional and procedural means for transferring variable length packets from a source to a destination via one or more networks while maintaining the quality of service requested by the transport layer. Typically, the network layer's main purposes are *inter alia* to perform network routing, network fragmentation and congestion control functions. The main examples of network layer protocols are the IP Internet Protocol or X.25.

With respect to Layers 4 to 7 it should be noted that depending on the application and service it is sometimes difficult to attribute an application or service to a specific layer of the OSI model since applications and services operating above Layer 3 often implement a variety of functions that are to be attributed to different layers of the OSI model. Therefore, especially in TCP(UDP)/IP based networks Layer 4 and above is sometimes combined and forms a so-called "application layer".

More information on OSI layer model can be for example found in the textbook "Computer Networks", by Andrew S. Tanenbaum, fourth edition, 2002, Prentice Hall PTR, chapter 1.4 incorporated herein by reference.

### LTE architecture

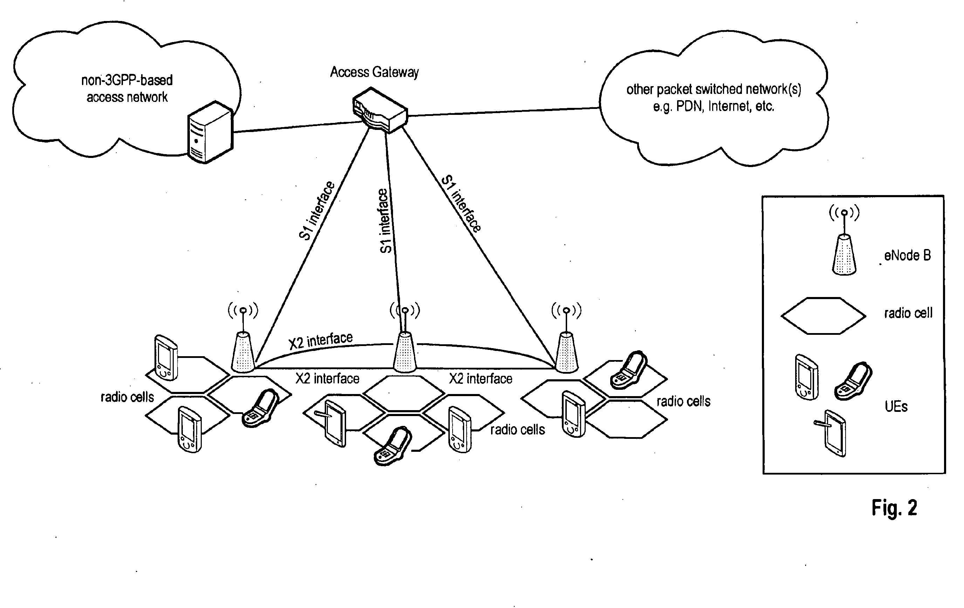

In Fig. 2 an overview of a 3GPP LTE mobile communication network is shown. The network consists of different network entities that are functionally grouped into the Core Network (CN), the Radio Access Network (RAN) and the User Equipments (UEs) or mobile terminals.

The RAN is responsible for handling all radio-related functionality *inter alia* including scheduling of radio resources. The CN may be responsible for routing calls and data connections to external networks.

The LTE network is a "two node architecture" consisting of Access Gateways (Access Gateway) being part of the CN and eNode Bs (eNode B) that are part of the RAN. The Access Gateway will handle CN functions, such as routing calls and data connections to external networks, and may also implement some RAN functions. Thus, the Access Gateway may be considered as to combine functions performed by GGSN and SGSN in today's 3G networks and RAN functions as for example header compression, ciphering/integrity protection. The eNode Bs may handle functions such as for example Radio Resource Control (RRC), segmentation/concatenation, scheduling and allocation of resources, multiplexing and physical layer functions.

A mobile communication network is typically modular and it is therefore possible to have several network entities of the same type. The interconnections of network elements are defined by open interfaces. UEs can connect to an eNode B via the air interface the so-called Uu interface. The eNode Bs have a connection to an Access Gateway via the so-called S1 interface. Two eNode Bs are interconnected via the so-called X2 interface.

Both 3GPP and Non-3GPP integration may be handled via the Access Gateway's interface to the external packet data networks (e.g. Internet).

### Layer 2 structure and Data Flow in LTE

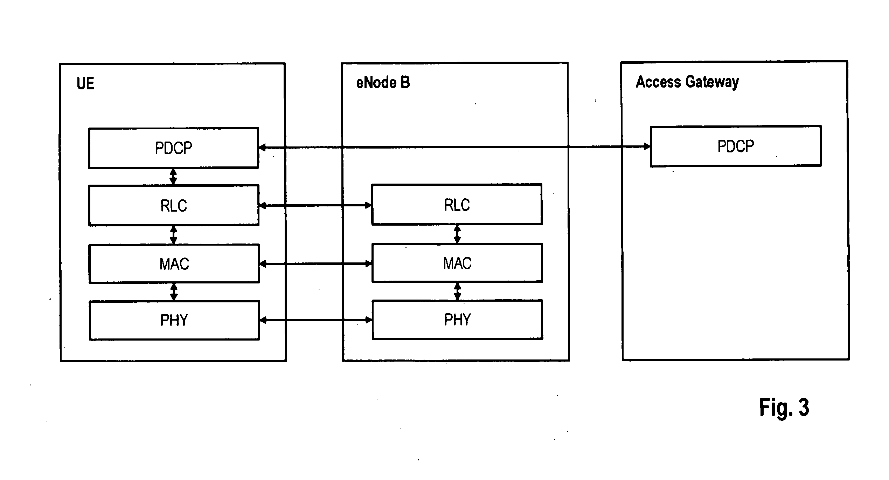

Fig. 3 shows an exemplary user-plane protocol stack in an LTE-based UTRAN. Layer 2 may be split in Medium Access Control (MAC), Radio Link Control (RLC) and Packet Data Convergence Protocol (PDCP). The RLC sublayer and the MAC sublayer are terminated in eNode B at network side. The PDCP layer is terminated in Access Gateway at network side. The functions of the Layer 2 sublayers are outlined in more detail in the following when the data flow is described for the downlink case.

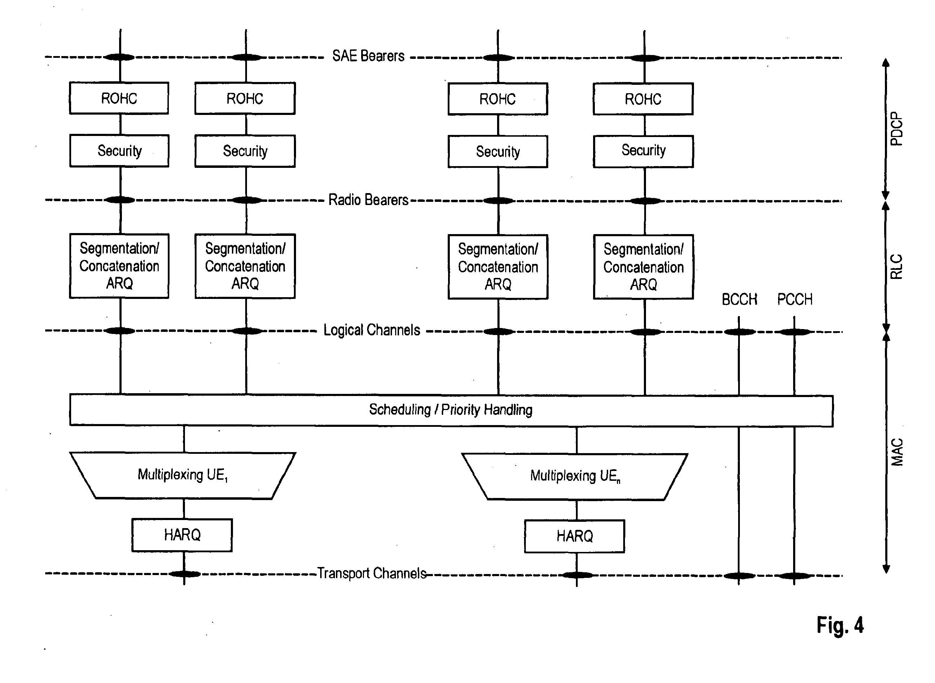

Fig. 4 shows the Layer 2 Structure for the downlink in eNode B and Access Gateway. Higher layer PDUs (e.g. IP packets) are received at the PDCP layer in the Access Gateway. The PDCP sublayer performs header compression (ROHC) and security operations such as ciphering as well as Integrity Protection (IP). For security operations a PDCP Sequence number is attached to every PDCP PDU passed to the RLC layer. This sequence number can be also used for reordering purpose, i.e. in order to provide in sequence delivery to higher layer. The PDCP PDUs are then forwarded to RLC layer in eNode B via the S1 interface.

RLC SDUs, i.e. IP packets, of a radio bearer received from PDCP layer are segmented and/or concatenated into RLC PDUs. Each RLC PDU is assigned a sequence number in order to support reordering functionality on receiving side. For efficiency reasons the RLC may reuse the sequence number assigned to the RLC SDUs by the PDCP sublayer, i.e. PDCP SN.

The forming of RLC PDUs is for example based on the selected transport block size by the scheduler and QoS attributes of the radio bearers. Padding should be avoided as much as possible when constructing a RLC PDU. Depending on the data transfer mode of the RLC entity the RLC layer supports error correction by means of an ARQ protocol. RLC retransmissions are for example based on RLC status reports, e.g. ACK/NACK, received from the peer RLC receiving entity. The RLC PDUs are passed to the MAC layer via logical channels.

The MAC layer comprises the scheduling and priority handling functionality, which manages physical channel resources between logical channels of one UE and between UEs according to their priority. RLC PDUs from different logical channels can be multiplexed into one Transport Block. The scheduler determines the Transport Block size considering for example reported channel quality, scheduling related control information, i.e. buffer status, received from UEs and QoS attributes of the scheduled logical channels. An HARQ protocol between UE and eNode B is used in order to allow for fast retransmission of erroneously received Transport Blocks. Similar to HSDPA and HSUPA one HARQ entity is capable of supporting multiple instances (HARQ processes) of stop and wait HARQ protocols. Each HARQ process is responsible for generating ACKs or NACKs indicating delivery status of Transport Block transmissions. The HARQ entity handles all tasks that are required for the HARQ protocol.

Finally MAC passes the generated Transport Blocks to the physical layer, which is responsible for the transmission over the radio channel.

The corresponding operation at the receiving side of UE is described in the following.

After performing error correction via HARQ correctly received Transport Blocks are demultiplexed into corresponding RLC PDUs. At RLC layer RLC SDUs are reconstructed according to the segmentation/concatenation information. In sequence delivery to higher layers is ensured and missing data is requested for retransmission. Reordering is done per logical channel. RLC PDU loss detection functionality is provided for example based on a simple receiving sliding window mechanism. The detection of a lost RLC PDU may for example trigger a retransmission request of ARQ protocol at RLC layer for AM data transmission mode. Reassembled IP packets are delivered to the PDCP layer.

At the PDCP Layer, IP header information is reconstructed and deciphering of data is performed before SDUs are passed on to higher layers.

### RLC sublayer

In the following we provide more information on the operation of the RLC protocol layer. The radio link control protocol is the Layer 2 protocol used in cellular systems for the transport of upper layer PDUs, i.e. IP Packets, received from PDCP layer in Access Gateway and error recovery for both user and control data.

An RLC SDU is a PDCP PDU (including a PDCP header). The RLC layer includes segmentation and concatenation functionality as already described before. Therefore an RLC PDU can be (or contain) one (or several) segment(s) of one (or several) RLC SDU(s).

There are three operational modes for RLC: transparent mode (TM), unacknowledged mode (UM) and acknowledged mode (AM). Each RLC entity is configured by RRC to operate in one of these. The service the RLC layer provides in the control plane is called Signaling Radio Bearer (SRB). In the user plane, the service provided by RLC layer is called a Radio Bearer (RB). In transparent mode no protocol overhead is added to RLC SDUs received from higher layer.

In special cases transmission with limited segmentation/reassembly capability can be accomplished. It has to be negotiated in the radio bearer setup procedure, whether segmentation/reassembly is used. The transparent mode is e.g. used for very delay-sensitive services like speech.

In unacknowledged mode data delivery is not guaranteed since no retransmission protocol is used. Hence received erroneous PDUs are discarded or marked depending on the configuration. The RLC SDUs, received from higher layer, are segmented/ concatenated into RLC PDUs on sender side. On receiver side reassembly is performed correspondingly. The unacknowledged mode is used, for example, for certain RRC signaling procedures. Examples of user services are the cell broadcast service (e.g. MBMS) and voice over IP (VolP).

The acknowledged mode is designed for a reliable transport of packet data through retransmission in the presence of high air interface bit error rates. In case of erroneous or lost PDUs retransmission is conducted by the sender upon reception of a status report from the receiver. ARQ is used as a retransmission scheme for retransmission of erroneous or missed PDUs.

The status report can e.g. be polled by the sender or self-triggered, i.e. upon detection a break in the sequence number sequence. The receiver sends a status report to the sender when triggered. The report typically indicates the reception status (either ACKs or NACKs) within the receiving window and up to the last received PDU.

An acknowledged mode RLC can be configured to provide both in-sequence and out-of sequence delivery to higher layers. As already mentioned before, in addition to data PDU delivery, status and reset control PDUs can be signaled between the peer entities. The acknowledged mode is the default mode for packet-type services, such as interactive and background services.

The main services and functions of the RLC sublayer include:
■ Transfer of upper layer PDUs supporting AM, UM or TM data transfer;
■ Error Correction through ARQ;
■ Segmentation according to the size of the TB;
■ Resegmentation when necessary (e.g. when the radio quality, i.e. the supported TB size changes)
■ Concatenation of SDUs for the same radio bearer is FFS;
■ In-sequence delivery of upper layer PDUs;
■ Duplicate Detection;
■ Protocol error detection and recovery;
■ SDU discard
■ Reset.

### PDU Header Fields

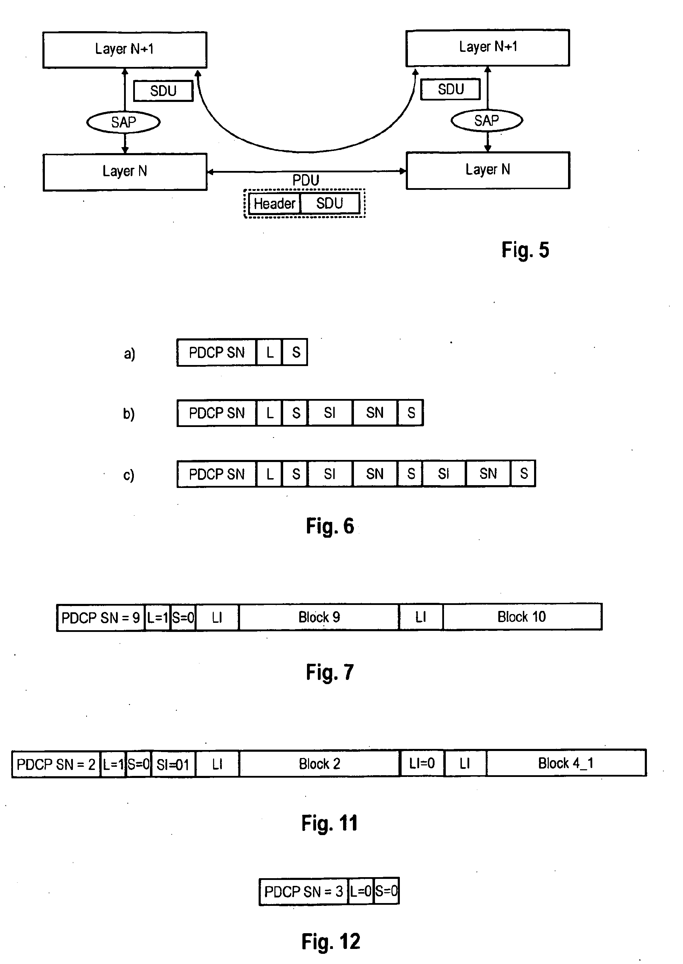

As explained before PDCP PDUs, i.e. RLC SDUs (e.g. containing IP packets) from one radio bearer are segmented and/or concatenated into a RLC PDU. The segmentation/concatenation may for example be done based on the scheduling algorithm. Based on information such as selected Transport Block size, QoS of the different users and logical channels and the buffer status the scheduler should indicate the size of the RLC PDU of a scheduled logical channel that the segmentation/concatenation function should generate. Given the size of the RLC PDU and the size of the IP packets of a logical channel, the segmentation/concatenation function may:
■ be transparent (single IP packet is transmitted)
■ perform concatenation of IP packets (multiple IP packets are transmitted)
■ perform segmentation of IP packets (at least one IP packet fragmented)
   Due to the way the RLC SDUs are segmented/concatenated in order to generate a RLC PDU, the following information is typically mandatory in the RLC header.
   The RLC PDU header is made up of basic fields and additional fields. The basic fields are sufficient if the RLC PDU is transporting non-segmented blocks only, e.g. full RLC SDUs. Additional header fields are needed when a RLC PDU contains segmented RLC SDUs. In this case a sequence comprised of sub-sequence number (SN), segmentation indicator (SI) and an additional S-Flag is appended to the basic header. It should be noted that herein the term block corresponds to a RLC SDU or IP packet, i.e. Block 1 is e.g. equal to IP packet 1.
   If re-fragmentation occurs, a further SN-SI-S sequence has to be used. This procedure yields a simple and recursive header structure that can be exploited in the receiver, thus allowing for easy implementation. The header structures are shown in Fig. 6 and the fields are described in more detail in the following subsections.

### Basic header fields (see Fig. 6, part a))

### ■ PDCP SN-Field

The PDCP sequence number is passed on by the PDCP layer and reused to indicate RLC PDU order and to identify a block within a RLC PDU. If PDCP SN is insufficient to reconstruct IP packets it is assisted by a subsequence number (SN) (see below).

### ■ L-Flag

If the L-Flag is set to "1" it indicates the use of length indicators "LI" (for description see below). The length indicators are needed in case more than one block is contained in a RLC PDU due to concatenation.

### ■ S-Flag

The S-Flag is set to "1" if the basic header is followed by additional header fields (see below).

### Additional header fields (see Fig. 6, part b) and c))

### ■ SI-Flags

The Segmentation Information (SI) indicates whether the first and/or the last blocks in the RLC PDU are RLC SDU fragments or full SDUs. It is not necessary to indicate the status of other blocks since by rules of construction they must be full RLC SDUs.

The SI information is important for the receiver in order to reassemble correctly segmented RLC SDUs. Only two bits for the complete RLC PDU are necessary.

| **SI** | **First RLC SDU segmented at the front** | **Last RLC SDU segmented at the end** |
|---|---|---|
| 00 | No | No |
| 01 | No | Yes |
| 10 | Yes | No |
| 11 | Yes | Yes |

### ■ SN-Field

A subsequence number (SN) is used in case of segmentation of blocks in order to allow for a correct reassembling of blocks at the receiver.

### ■ Additional S-Flag

Subsequent S-Flags indicate whether a further SN-SI-S combination is following in the header structure (refer to Fig 6., part c)). Such an additional sequence is used in case of a RLC PDU is again further segmented for an RLC retransmission by ARQ, which is also referred to as re-segmentation.

### ■ LI-Field

The block length indicators are required to indicate the length of the different blocks that are composing the RLC PDU. There should be at least as many length indicators as there are blocks in the PDU. The packet size usually does not exceed 1500 byte and thus at most 11 bits will be required per length indicator assuming byte alignment while keeping full flexibility. Packets that exceed the length indicator size will be segmented and transmitted in multiple RLC PDUs.

An example of a RLC PDU containing two complete RLC SDUs (e.g. IP packets) is shown in Fig. 7. In this example after the PDCP SN the L-Flag is set to 1 signaling the use of LI-Field within this RLC PDU. The S-Flag is set to 0 since the RLC SDUs are not segmented; therefore no additional header elements are following. The first LI-Field indicates the length of the first data field (Block 9) which is followed by the next LI-Field indicating the length of the second data field (Block 10).

### Transmission of S1 and X2 interface

In the exemplary LTE-based UTRAN architecture shown in Fig 2, the S1 interface connects the Access Gateway and eNode B. On the user plane IP packets comprised in RLC SDUs, are transmitted on the S1 interface. The user plane protocol instance on S1 is for example an IP tunnel, if transport on S1 interface is assumed to be IP based. Therefore there is the possibility that some IP packets get lost on S1 interface or some packets may arrive out of sequence.

By introducing a retransmission loop between Access Gateway and eNode B or using TCP between Access Gateway and eNode B as the transport port layer protocol the S1 user plane protocol could be made a reliable interface. However this would add some significant complexity both in the protocol specification and also in the product implementation. Furthermore for example TCP as a connection-oriented type of protocol with a three-way handshake would also create additional latency in the tunnel setup. Due to these drawbacks the potential loss of IP packets on S1 is not taken care by any other protocol than the end-to-end transport protocol, provided that TCP is used here.

The same considerations apply to the X2 interface between eNode Bs. There is also the risk that IP packets forwarded over the X2, i.e. in case of inter-eNode B mobility, are lost.

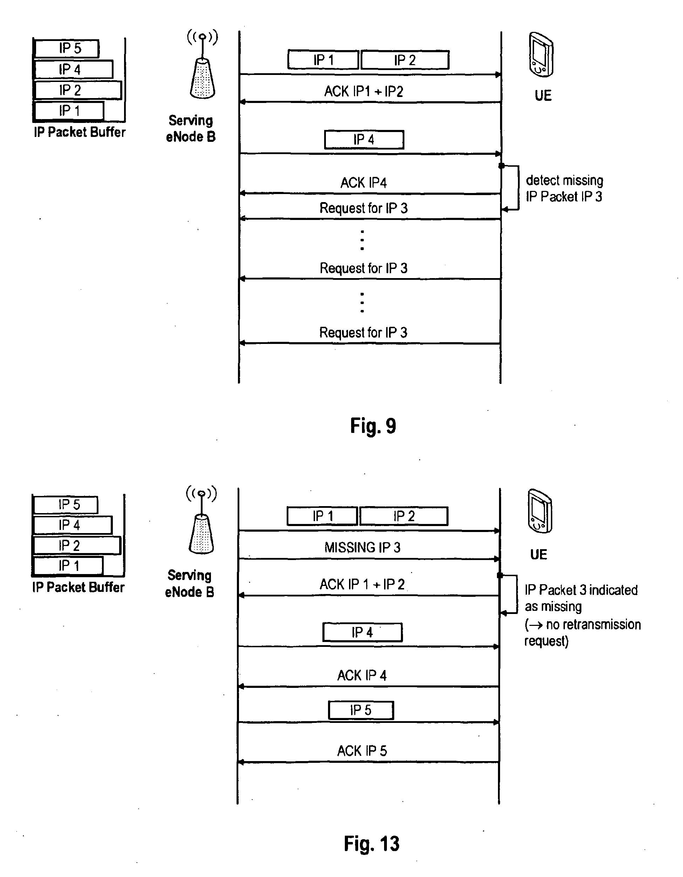

Assuming that the S1 and also X2 interface doesn't provide a reliable transport of IP packets, there might be a risk of packet loss on those interfaces. Since the PDCP sequence number is reused at the RLC layer in order to reduce the protocol overhead there will be a gap in the sequence numbers of the RLC PDUs whenever a packet loss (i.e. a RLC SDU loss) occurs on S1 interface in the downlink. Although eNode B can detect the packet loss on S1 interface based on the received PDCP SNs from Access Gateway the RLC protocol tries to correct this packet loss since the RLC receiving entity in UE cannot distinguish between a loss on the air interface or on S1 interface. An exemplary scenario of a standard RLC layer behavior in case of a packet loss (IP packet 3) is shown for exemplary purposes in Fig. 9

In this example IP packet 3 is lost on the S1 interface due to congestion or other reasons, eNode B transmits IP Packets 1,2 and 4 successfully to the UE. Upon detection of the gap in the RLC sequences at the reordering buffer the UE will send a RLC status report to the transmitting entity at eNode B requesting for the retransmission of IP packet 3. As explained before the RLC receiver cannot distinguish between a packet loss on the radio interface or on S1 interface.

Since IP packet 3 was lost on S1 interface there will be obviously no RLC retransmission. Consequently UE will resend the retransmission request for IP packet 3 according to the RLC protocol since the gap in the reordering buffer will remain.

As a conclusion due to the fact that UE cannot distinguish between packet losses on the radio interface or on S1 interface the RLC protocol tries to correct packet losses on S1 by requesting repeatedly for RLC retransmissions. Consequently uplink resources are wasted for the RLC retransmission requests. In LTE UL, where all transmissions are scheduled by the eNode B, UE might be required to send a scheduling request only for the transmission of the RLC status reports, which is quite costly in terms of uplink resources.

Furthermore the delivery of RLC SDUs to higher layer is delayed at the RLC receiver, i.e. reordering, since RLC receiver waits for the retransmission of IP packets lost on S1 interface. This might degrade the end-to-end performance.

WO 00/60799 A discloses a telecommunications system and method for implementing a semi-reliable retransmission protocol that utilizes both selective Automatic Repeat Request (ARQ) and segmentation and assembly of data packets. The new semi-reliable retransmission protocol includes a time based triggering of a retransmission timeout for retransmission protocols, which allows the retransmission timeout to become insensitive to variations in the channel rate. In addition, the retransmission timeout can be defined based upon the maximum delay allowable for the retransmission of corrupted data packets over the air interface.

According to WO 00/60799 A a discard timer monitoring the transmission time of the data packet is initialized which monitors the transmission time of the SDUs. If the discard timer lapses during the transmission of an SDU, this SDU is marked as "discarded" in the transmitter and the mobile terminal is notified thereon by a "move receiving window" request message to ensure that the transmissions received by the receiver that carry the SDU (i.e. the PDUs that have been previously transmitted) are discarded in the mobile station. All PDUs carrying segments of a "discarded" SDU can be emptied from the receiver buffer and the data link layer of the receiver will no longer request retransmissions of any PDUs within the discarded SDU.

### SUMMARY OF THE INVENTION

The object of the invention is to provide an efficient downlink transmission protocol in the presence of losses of service data units in a mobile communication system. Further, another more specific object is to reduce the delay imposed on downlink transmissions by retransmission requests of service data units that are not available at the transmitting entity.

The object is solved by the subject matter of the independent claims. Advantageous embodiments of the invention are subject matters of the dependent claims.

One main aspect of the invention is to inform a mobile terminal to be provided with a sequence of service data units on a service data unit (or service data units) that are missing in this sequence. Based on the knowledge of missing service data unit(s) in the sequence, the mobile terminal may not send a retransmission request for service data units that are missing. For example, this mechanism may be advantageously used on the RLC Layer level of a mobile communication system. In one exemplary embodiment of the invention the signaling of an indication of missing service data units may for example be service data units that have bee lost on the S1 interface or X2 interface of a LTE UMTS communication network.

According to one embodiment of the invention a method for avoiding retransmission requests for missing service data units in a mobile communication system is provided. The service data units are transmitted in form of protocol data units by a protocol layer providing a packet retransmission scheme. A base station my determine at least one missing service data unit within a sequence of service data units to be transmitted to a mobile terminal in form of protocol data units based on the sequence numbers comprised in the service data units. Next, it may inform the mobile terminal on the at least one missing service data unit, and may further utilize a packet retransmission scheme for transmitting the sequence of service data units in form of protocol data units to the mobile terminal.

In a further advantageous embodiment, the protocol data units transporting the service data units reuse the sequence number of the service data units provided by a higher protocol layer for indicating the order of protocol data units in said sequence. For example, this could mean in one embodiment of the invention that the PDCP sequence number is used as a sequence number for numbering RLC Layer PDUs.

Different mechanism on how the information on the missing service data unit(s) can be conveyed to the mobile terminal may be used. In one exemplary embodiment of the invention the mobile terminal is informed on the at least one missing service data unit by transmitting a control protocol data unit to the mobile terminal indicating the sequence number of each at least one missing service data unit.

Alternatively, in another embodiment of the invention the mobile terminal is informed on the at least one missing service data unit by setting in a protocol data unit of said sequence a header field for a missing service data unit. For example, this header field could be a length indicator field indicating a payload size of zero for the missing service data unit.

In another embodiment of the invention the mobile terminal is informed on the at least one missing service data unit by inserting a dummy protocol data unit for each missing service data unit into the sequence of protocol data units and transmitting the dummy protocol data unit to the mobile terminal. In a variation the dummy protocol data unit comprises the sequence number of the missing service data unit. Further, the dummy protocol data unit may for example comprise only header information and no payload.

Another embodiment of the invention further suggests that the base station receives the service data units from an upstream network node of the mobile communication network using an unreliable transport mechanism. Further, the base station may form the protocol data units by adding header fields to the received service data units.

The base station may further optionally foresee a buffer for buffering the service data units for transmission in form of protocol data units. If for example the mobile terminal is handed over from the base station to another base station, the base station may transfer the service data units (in the buffer) not yet successfully transmitted to the mobile terminal to another base station. Hence, for example, the service data units that are currently pending in a retransmission process as well as service data units for which no initial transmission has been made will be transferred to the "new" target base station by the "old" source base station upon handover.

The base station may also act as the base station to which the mobile terminal is handed over. In this exemplary scenario according to another embodiment of the invention, the base station may further receive an indication on the first service data unit expected to be transmitted by the base station after handover of the mobile terminal to the base station from another base station. It is to be noted that service data units expected to be transmitted by the base station after handover refers to the service data units that have not yet been (positively) acknowledged or that have not yet transmitted. As on the service data unit level there is not separation between these to cases, the mobile terminals thus indicates the next service data unit it expects to be retransmitted or the next service data unit it expects to be initially transmitted.

In another embodiment of the invention the base station may further detect at least one missing service data unit within a sequence of service data units to be transmitted to the mobile terminal based on the indication of the first service data unit expected by the mobile terminal after handover.

Another method for avoiding retransmission requests for missing service data units in a mobile communication system according to a further embodiment of the invention relates to the operations at a mobile terminal. Also in this embodiment of the invention the service data units are transmitted in form of protocol data units by a protocol layer providing the packet retransmission scheme.

According to this method, the mobile terminal may receive an indication of at least one missing service data unit from a base station, and may further utilize a packet retransmission scheme for receiving the sequence of protocol data units transporting a sequence of service data units from the base station. If a service data unit has been indicated as missing, the mobile terminal will prevent the transmission of a retransmission request for the respective service data unit.

The at least one missing service data unit may be indicated to the mobile terminal using the different mechanisms described above.

In a further exemplary embodiment the packet retransmission scheme utilizes a receiving window indicating a range of sequence numbers of service data units expected to be received by the mobile terminal within a given time period. In this exemplary embodiment, the mobile terminal may further forward a sequence of service data units to the next higher protocol layer prior to expiry of this time period, if all service data units missing within a sequence of service data units within the receiving window have been indicated as missing by the base station. This operation may have the advantage to avoid unnecessary delays due to waiting for and repeatedly requesting a missing service data unit out of the current receiving window.

Moreover it could also be advantageous to inform a higher protocol layer on the at least one missing service data unit. This mechanism may for example prevent the generation of a retransmission request on higher protocol layers.

Another embodiment of the invention foresees that the mobile terminal transmits to another base station an indication of the first service data unit expected to be received by the mobile terminal upon handover from the mobile terminal from the base station to the other base station. In one exemplary embodiment of the invention this indication of the first service data unit is comprised within a message confirming the handover. This operation may for example have the advantage to allow the new base station to detect the loss of service data units on a wired interface to the old base station.

In another embodiment of the invention, the reused sequence number of the protocol data units is the sequence number of service data units of the Packet Data Convergence Protocol layer.

Further, in one exemplary embodiment of the invention the steps of the methods according to the different embodiments described herein are performed by a Radio Link Control protocol layer entity of the base station or mobile terminal.

Another embodiment of the invention relates to a base station for avoiding retransmission requests for missing service data units in a mobile communication system. Also in this embodiment of the invention the service data units are transmitted in form of protocol data units by a protocol layer providing the packet retransmission scheme in a mobile communication system. The base station may comprise a processor for determining at least one missing service data unit within a sequence of service data units to be transmitted to a mobile terminal in form of protocol data units based on the sequence numbers comprised in the service data units, and a transmitter informing the mobile terminal on the at least one missing service data unit. The station or more precisely a transmission section and receiving section thereof may be adapted to utilize a packet retransmission scheme for transmitting the sequence of protocol data units to the mobile terminal.

The base station according to another embodiment may comprise means adapted to perform the steps of the method for avoiding retransmission requests according to one of the various embodiments of the invention described herein.

Further, another embodiment of the invention provides a mobile station for avoiding retransmission requests for missing protocol data units in a mobile communication system. The mobile terminal may comprise a receiver for receiving an indication of at least one missing serving data unit from a base station, and a transmitter for transmitting a retransmission request for a service data unit, if same has not been received in at least one protocol data unit from the base station and the service data unit has not been indicated as missing. The mobile terminal or more precisely a transmission section and receiving section may be adapted to utilize a packet retransmission scheme for receiving the sequence of protocol data units conveying a sequence of service data units from the base station.

A further embodiment of the invention relates to a mobile terminal comprising means adapted to perform the steps of the method for avoiding retransmission requests according to one of the various embodiments of the invention described herein.

Moreover, one embodiment of the invention relates to a computer readable medium storing instructions that, when executed by the processor of a base station, cause the base station to avoid retransmission requests for missing service data units in a mobile communication system. The base station is caused to avoid retransmission requests by determining at least one missing service data unit within a sequence of service data units to be transmitted to a mobile terminal in form of protocol data units by a protocol layer providing the packet retransmission scheme based in the sequence numbers comprised in the service data units, informing the mobile terminal on the at least one missing service data unit, and utilizing a packet retransmission scheme for transmitting the sequence of service data units in form of packet data units to the mobile terminal.

The computer readable medium according to another embodiment of the invention further stores instructions that, when executed by the processor of the base station, causes the base station to perform the method the method for avoiding retransmission requests according to one of the various embodiments of the invention described herein.

Further, another embodiment of the invention relates to a computer readable medium storing instructions that, when executed by a processor of a mobile terminal, cause the mobile terminal to avoid retransmission requests for missing protocol data units of a protocol layer providing the packet retransmission scheme in a mobile communication system by receiving an indication of at least one missing service data unit from a base station, utilizing a packet retransmission scheme for receiving the sequence of protocol data units transporting a sequence of service data units from the base station, and preventing the transmission of a retransmission request for a service data unit, if same has been indicated as missing.

In a further embodiment of the invention the computer readable medium stores instructions that, when executed by the processor of the mobile terminal, causes the mobile terminal to perform the method the method for avoiding retransmission requests according to one of the various embodiments of the invention described herein.

Moreover, the invention according to another embodiment provides a mobile communication system comprising at least one base station according to one of the different embodiments herein and at least one mobile station according to one of the different embodiments herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an overview on the OSI Layer model,
- **Fig. 2**: shows an exemplary overview on the functional entities and interfaces in the architecture of an LTE UMTS communication system,
- **Fig. 3**: shows an exemplary protocol stack of the user plane in an LTE UMTS communication system,
- **Fig. 4**: shows an exemplary Layer 2 structure for downlink transmission in an eNode B and an Access Gateway,
- **Fig. 5**: shows the relation of service data units (SDUs) and protocol data units (PDUs) in the OSI Layer model,
- **Fig. 6**: shows the exemplary RLC header fields in an LTE UMTS communication system,
- **Fig. 7**: shows an exemplary RLC PDU comprising two complete SDUs (e.g. IP packets),
- **Fig. 8**: shows an exemplary inter-e Node B handover in an LTE UMTS communication system,
- **Fig. 9**: shows a conventional RLC operation in case of packet loss on the S1 interface of an LTE UMTS communication system,

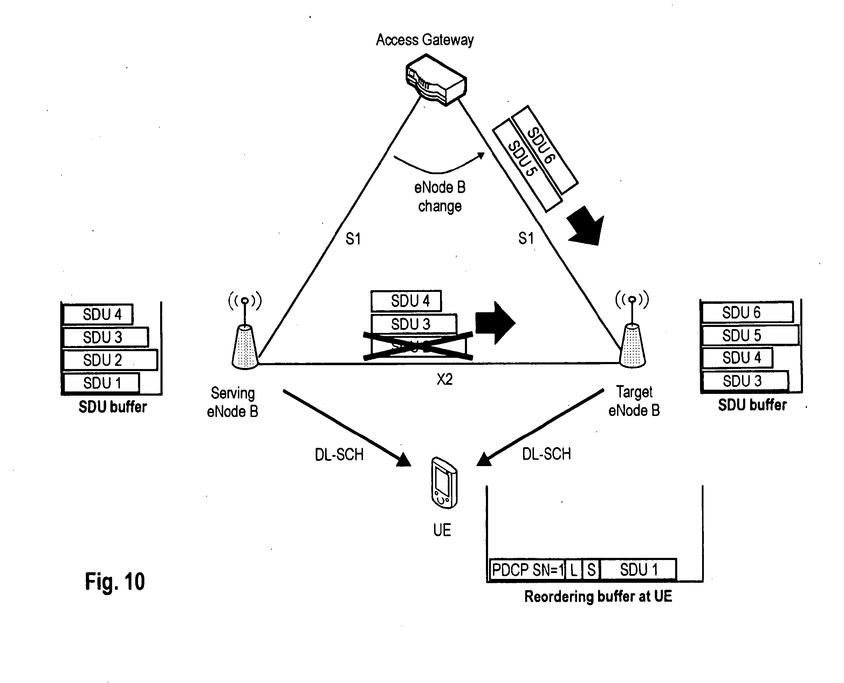

- **Fig. 10**: shows a conventional RLC operation in case of packet loss on the X2 interface of an LTE UMTS communication system,
- **Fig. 11**: shows an exemplary RLC PDU with an LI field set to zero according to one embodiment of the invention,
- **Fig. 12**: shows an exemplary "dummy" RLC PDU according to an exemplary embodiment of the invention, and
- **Fig. 13**: shows an exemplary signaling procedure between an eNode B and a UE allowing to prevent unnecessary retransmission requests according to an exemplary embodiment of the invention, and
- **Fig. 14**: shows an exemplary intermediate PDU/SDU buffer status and a receiving window of the UE in the signaling procedure of Fig. 13 and
- **Fig. 15**: shows an exemplary intermediate PDU/SDU buffer status and the updated receiving window of the UE upon having forwarded buffered SDUs indicated in Fig. 14 to a higher protocol layer.

### DETAILED DESCRIPTION OF THE INVENTION

The following paragraphs will describe various embodiments of the invention. For exemplary purposes only, most of the embodiments are outlined in relation to an (evolved) UMTS communication system according to the LTE discussed in the Background Art section above. It should be noted that the invention may be advantageously used for example in a mobile communication system such as the LTE UMTS communication system previously described, but the invention is not limited to its use in this particular exemplary communication network.

Accordingly, also the terminology used herein mainly bases on the terminology used by the 3GPP. However, the terminology and the description of the embodiments with respect to an LTE (UMTS) architecture is not intended to limit the principles and ideas of the inventions to such systems.

The detailed explanations given in the Technical Background section above are intended to better understand the mostly LTE specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

Before discussing the invention in further detail herein, the terms service data unit (SDU) and protocol data unit (PDU) as used herein are defined. In order to formally describe in a generic way the exchange of packets between layers in the OSI model, SDU and PDU entities have been introduced. An SDU is a unit of information (information block) transmitted from a protocol at the layer N+1 that requests a service to a protocol located at layer N via an a so-called service access point (SAP). A PDU is a unit of information exchanged between peer processes at the transmitter and at the receiver of the same protocol located at the same layer N.

If no transparent mode is used, a PDU is generally formed by a payload part consisting of the processed version of the received SDU(s) preceded by a layer N specific header and optionally terminated by a trailer. It should be noted that the header fields may be positioned at a predetermined position(s) of the PDU and do not necessarily have to precede the payload part. Since there is no direct physical connection (except for Layer 1) between these peer processes, a PDU is forwarded to the layer N-1 for processing. Therefore a layer N PDU is from a layer N-1 point of view a SDU. The definitions above are illustrated in Fig. 5 showing the relation of service data units (SDUs) and protocol data units (PDUs) in the OSI Layer model.

As has been previously indicated, for example if unreliable transport has to be used to pass an SDUs of Layer N+1 to Layer N for further transport in form of PDUs some of the SDUs may get lost. If the receiver receiving the Layer N PDUs and extracts the SDUs transported therein same may recognize the missing SDU(s) and may trigger its/their retransmission which impacts the system performance by additional transport delay since the missing SDUs may not be available at the transmitter. One main aspect of the invention is to let the receiver know which SDUs are not available for retransmission at the transmitter side so that the receiver will not issue retransmission requests for these SDUs, thereby avoiding a waste of resources used for signaling of unnecessary retransmission requests and reducing the delay of data delivery.

For example, considering the case having been discussed with respect to Fig. 9 above, IP packets may be used to provide the PDCP PDUs (i.e. RLC SDUs) from an Access Gateway to an eNode B for downlink delivery to the UE. If some of the PDCP SDUs get lost (e.g. due to the IP packets not being delivered (in sequence) to the eNode B, the eNode B may not forward same and may also not serve a retransmission request by the UE for the lost PDCP PDUs (i.e. RLC SDUs). By notifying the RLC receiving entity about packet losses on S1 interface the UE may be made aware of those SDUs for which no retransmission will be possible. Based on this knowledge the UE may not unnecessarily transmit retransmission requests for those indicated SDUs but may immediately pass the SDUs in a sequence, for example the current receiving window of RLC, to the next higher layer.

Some embodiments of the invention relating to this special scenario introduce new signaling which could be either RLC control signaling or a special RLC header value in order to inform the RLC receiver on the missing PDUs.

Generally, it is to be noted that in some embodiments of the invention it is further assumed that the sequence number of higher layer SDUs is (re)used in the protocol layer providing the SDUs in form of PDUs to a receiver to identify the individual PDU's position the sequence of PDUs provided to the receiver. For example, as discussed above, the RLC layer may reuse the PDCP sequence numbers in the PDUs of the PDCP layer (i.e. RLC SDUs).

In the following the principles of the invention according different embodiments will be explained based on the above mentioned special exemplary case of providing PDCP layer PDUs (i.e. RLC SDUs) by a RLC layer in form of RLC PDUs to a receiver, such as a UE. In the exemplary scenarios it may be further assumed that the RLC layer reuses the PDCP sequence number as described herein previously.

It should be however noted that the reference to this special scenario is used for exemplary purposes only and that the invention may be also used in scenarios, where SDUs of a Layer N+1 are transported by a Layer N in form of PDUs. Moreover, the invention may be also used in scenarios, where SDUs of a Layer N+1 are transported by a Layer N in form of PDUs and where the Layer N reuses the sequence numbering of the Layer N+1 SDUs.

Fig. 13 shows an exemplary signaling procedure between an eNode B and a UE allowing to prevent unnecessary retransmission requests according to an exemplary embodiment of the invention. In this embodiment it is assumed that IP packets are used to convey SDUs to the eNode B by a higher protocol layer N+1 for delivery to the UE in form of PDUs by protocol layer N. Hence, the terms IP packet and SDU may be considered equivalent in this scenario. Further, it is assumed for exemplary purposes that the sequence numbers of the SDUs are reused in the PDUs. IP packets IP 1 to IP 5 have to be understood as a sequence of SDUs within the current transmission window of the layer N retransmission scheme (a corresponding receiving window is maintained at the receiver).

In the exemplary signaling procedure, it is assumed that IP packet IP 3 is not available for transmission to the UE in the eNode B's buffer, e.g. due to the packet's loss upon transfer to the eNode B. Accordingly, the SDU(s) which have been transported to the eNode B by the lost IP packet IP 3 are not available for transmission to the UE.

First, the eNode B provides the SDUs of packets IP 1 and IP 2 to the UE in form of PDUs. Thereby, the sequence number of the SDUs is used for identification of the PDUs. The UE acknowledges the SDU's successful reception, e.g. by means of a positive acknowledgement ACK indicating the sequence number of the SDUs. The eNode B further informs the UE (MISSING IP 3) that at least one SDU is missing at the transmitter end, i.e. the SDU(s) transported by IP packet IP 3 in this example. The UE may be informed on missing SDUs upon detecting their loss at the eNode B. Subsequently the remaining SDUs in the e Node B's buffer corresponding to IP packets IP 4 and IP5 are delivered to the UE and may be acknowledged by same.

Upon notification of the lost SDU(s) of packet IP 3 (e.g. on S1 interface) the layer N protocol entity of the UE should not send unnecessary status reports, i.e. retransmission request, for the notified lost SDU(s) in order to avoid a waste of uplink resources.

Furthermore the layer N protocol entity of the UE may not wait for a lost SDU before delivering already other correctly received SDUs to higher layer. Hence, for example if the SDUs or IP packets IP 1 to IP 5 are considered to correspond to the SDUs of the current receiving window, the layer N protocol entity of the UE may forward the SDUs in the sequence number range of the current receiving window to the next higher layer N+1 upon recognizing that all SDUs (identified by their sequence number) of the current receiving window have been either received or have been indicated as lost/missing. Next, the layer N protocol entity of the UE may update the sequence number range of SDUs of the receiving window accordingly.

This operation may be advantageous in comparison to conventional solutions due to the following reasons. Usually there is a timer in the UE, which is also referred to as reordering release timer, which controls the stall avoidance in the UE reordering buffer. Basically this timer controls the maximum waiting time for a missed packet, i.e. SDU in the reordering buffer. In case the timer expires before the SDU arrives all correctly received SDUs within the receiving window will be delivered to higher layer. Upon receiving the notification of a lost packet at protocol layer N entity at the UE (e.g. the RLC layer entity) should not wait until the timer expires before delivering correctly received SDUs to higher layer as explained above. In addition to the delivery of correctly received SDUs to higher layer, the layer N entity should also inform the higher layer entity (layer N+1), e.g. PDCP layer entity, about the packet loss. The layer N+1 entity may for example use this information in order to optimize it's protocol operation, e.g. in case the layer N+1 (e.g. PDCP layer) also provides in sequence delivery of SDUs to higher layers, i.e. provides a reordering function.

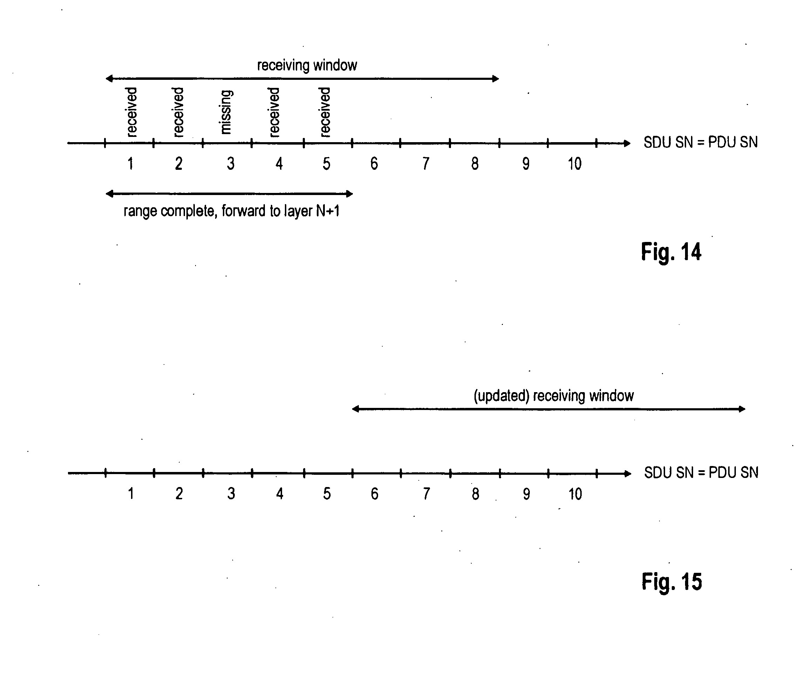

Fig. 14 shows an exemplary intermediate PDU/SDU buffer status and a receiving window of the UE in the signaling procedure of Fig. 13. Fig. 14 illustrates the exemplary situation at the UE upon having received the SDU of IP packet IP5 at the layer N entity. The receiving window is assumed to indicate a range of 8 sequence numbers (SN 1 to 8 for example). The PDUs/SDUs with sequence number 1, 2, 4 and 5 have been successfully received at the UE while PDU/SDU with sequence number 3 (corresponding to the lost SDU in IP packet IP3) has been indicated as missing. The layer N entity of the UE may thus detect that reception of a range of SDUs within the receiving window is completed (sequence numbers 1 to 5) and may forward the SDUs to the next higher protocol layer N+1 entity. Further the forwarded SDUs may be flushed and the receiving window may be advanced. Fig. 15 shows an exemplary intermediate PDU/SDU buffer status and the updated receiving window of the UE upon having forwarded buffered SDUs the higher protocol layer N+1. The SDUs in the sequence number range of 1 to 5 have been flushed from the buffer and the receiving window has been advanced.

Next, different options how to indicate missing SDUs to a mobile terminal (e.g UE) according to different embodiments of the invention will be discussed. Generally, there are different options how the transmitting protocol layer N entity in a node B (e.g. eNode B) can inform the receiving protocol layer N entity in the mobile terminal about a packet loss.

A first option may be to send the notification on missing SDUs in from of a control PDU from base station to mobile terminal. Considering for exemplary purposes the operation of RLC layer entities at a eNode B and UE, the notification could be for example signaled by means of a new RLC control PDU, i.e. RLC status message. Similar to UMTS Re99/4/5/6 systems, a new or extended STATUS PDU may be used to exchange status information between two RLC entities. Here, the status message may contain or indicate the sequence numbers, i.e. PDCP SN, of the lost SDU(s).

Alternatively the notification could be done by means of a special header value in the PDU headers. Considering for exemplary purposes the operation of RLC layer entities at a eNode B and UE again a special RLC header field for indicating lost SDUs may be defined. As described before in case of concatenation of several (segments of) IP packets/SDUs in one RLC PDU the Length Indicator (LI) field indicates the length of the (segmented) RLC SDUs that are composing the RLC PDU. In order to indicate that an RLC SDU is lost (e.g. on the S1 interface), the RLC transmitting entity may set the LI field to zero for this RLC SDU. Obviously there would be zero payload for an lost RLC SDU. Fig. 11 is showing the example where RLC SDU 3, e.g. IP packet 3 is lost on S1 interface. Since a zero LI field inherently indicates the notification there is basically no additional overhead for the notification message incurred by this solution.

Another alternative would be to use a "dummy" PDU in order to notify a mobile terminal about a packet loss. In an exemplary embodiment of the invention, this "dummy PDU" is a "dummy" RLC PDU as shown in Fig. 12. The PDCP SN denotes the lost RLC SDU/ IP packet. Since the "dummy" RLC PDU just contains a header, i.e. no payload (payload size = 0).

As in UMTS systems also for connected UEs in an LTE-based UTRAN (E-UTRAN), network controlled UE assisted handovers may be performed. Based on measurements reported by the users eNode B may make a decision to hand off UE to a different cell. The measurement reported by the UE is for example the downlink channel quality of a cell measured based on received pilot energy. Measurements to be performed by a UE for intra e-UTRAN mobility can be controlled by E-UTRAN, using broadcast or dedicated control.

In case the quality of the current radio link gets below a different quality threshold, eNode B may decide to hand over the UE to a neighbor cell which is reported to provide a better radio link quality.

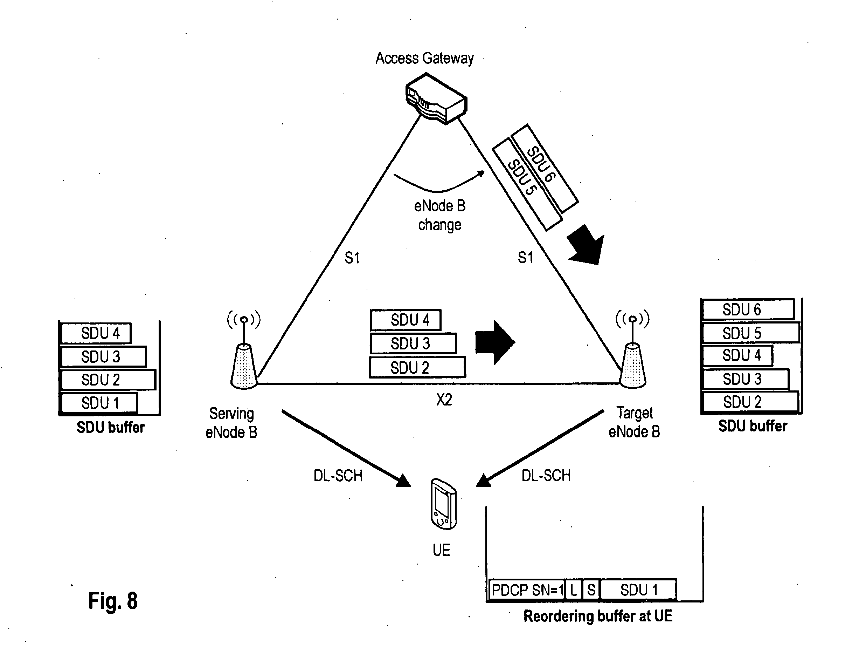

In case UE is handed over to a cell controlled by a different eNode B, also referred to inter eNode B handover, data forwarding of RLC SDUs from the Serving or Source eNode B (SeNode B) to the new target eNode B (TeNode B) is done in order to provide a lossless handover. The scenario is shown in Fig. 8. Before the handover UE is connected to SeNode B, RLC SDUs (IP packets) are sent from Access Gateway to SeNode B over the S1 interface. SeNode B controls the transmission of the IP packets to the user over the radio channel by means of scheduling as described above. It's assumed here for exemplary purposes that the RLC is configured in acknowledged mode.

Upon handover, the source eNode B forwards all downlink RLC SDUs, starting from the first SDU that has not been successfully received by the UE, to the target eNode B over the X2 interface. The source eNode B discards any remaining downlink RLC PDUs. The target eNode B re-transmits all downlink RLC SDUs forwarded by the source eNode B. In the following an example of the data forwarding mechanism is given. Before handover the RLC status of the transmitted RLC SDUs is as follows:
■ RLC SDU {2} is fully acknowledged (ACK),
■ RLC SDU {3} has outstanding segments, i.e. RLC PDUs (partly ACK),
■ RLC SDUs {4,} fully acknowledged (ACK)

As can be seen RLC SDUs 2 & 4 are correctly received by the UE. One or several RLC PDUs containing segments of RLC SDU 3 have not been correctly received by the UE, i.e. UE has send a NACK for those RLC PDUs. Upon handover not only RLC SDU 3 but also RLC SDU 4 is forwarded to the TeNode B. The RLC SDU forwarding allows for a simple handover mechanism where no RLC context, i.e. status of the RLC SDUs, needs to be transferred to the target eNode B. However the solution can be slightly less efficient due to re-transmissions of already acknowledged RLC SDUs from the Target eNode B (SDU 4 in the example above).

During inter-eNode B handover the source eNode B forwards all downlink RLC SDUs, starting from the first SDU that has not been successfully received by the UE, to the target eNode B over the X2 interface. Similar to the S1 interface there is also the possibility of lost packets on the X2 interface. A problem may occur where the target eNode B is not always able to clearly detect such packet losses. One exemplary scenario is shown in Fig. 12. In this example IP packet 2 is lost during forwarding over X2 interface. Since eNode B cannot detect this loss it cannot inform UE about the lost IP packet. As a consequence RLC receiving entity in UE will send an unnecessary RLC retransmission request if operated in a conventional manner.

This will cause a waste of uplink resources as already explained before. Packet loss on inter-base station connections such as the X2 interface may be overcome for example by the mobile terminal being handed over signaling a sequence number of the SDU it is expecting to receive first from the new base station (e.g. the target eNode B in the scenario discussed above).

Considering for exemplary purposes the operation of RLC layer entities at a eNode B and UE again, the UE may signal the PDCP SN of the first RLC SDU (IP packet) that needs to be retransmitted or transmitted by the target eNode B after handover. The indicated PDCP SN may denote the IP packet with lowest SN that is forwarded from source eNode B to the target eNode B. This operation may allow the target eNode B to always detect a packet loss on inter-eNode B interface X2 during eNode B change/handover. Alternatively the UE may signal the sequence number of the last RLC SDU, e.g. IP packet that was correctly received in-sequence by the UE. In an exemplary embodiment of the invention the PDCP SN of the first IP Packet that needs to be retransmitted or transmitted by the target eNode B after handover is included in the "handover confirm" message sent from the UE to the target eNode B to complete the handover procedure for the UE.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

## Claims

1. A method for avoiding retransmission requests for missing service data units in a mobile communication system, wherein service data units are transmitted in form of protocol data units by a protocol layer providing a packet retransmission scheme, the method comprising the following steps performed by a base station:
determining at least one missing service data unit within a sequence of service data units to be transmitted to a mobile terminal in form of protocol data units based on the sequence numbers comprised in the service data units,
informing the mobile terminal on the at least one missing service data unit, and
utilizing a packet retransmission scheme for transmitting the sequence of service data units in form of protocol data units to the mobile terminal.

2. The method according to claim 1, wherein the protocol data units transporting the service data units reuse the sequence number of the service data units provided by a higher protocol layer for indicating the order of protocol data units in said sequence.

3. The method according to claims 2, wherein the reused sequence number of the protocol data units is the sequence number of service data units of the Packet Data Convergence Protocol layer.

4. The method according to one of claims 1 to 3, wherein the mobile terminal is informed on the at least one missing service data unit by transmitting a control protocol data unit to the mobile terminal indicating the sequence number of each at least one missing service data unit.

5. The method according to one of claims 1 to 3, wherein the mobile terminal is informed on the at least one missing service data unit by setting in a protocol data unit of said sequence a header field for a missing service data unit.

6. The method according to claim 5, wherein the header field is a length indicator field indicating a payload size of zero for the missing service data unit.

7. The method according to one of claims 1 to 3, wherein the mobile terminal is informed on the at least one missing service data unit by inserting a dummy protocol data unit for each missing service data unit into the sequence of protocol data units and transmitting the dummy protocol data unit to the mobile terminal.

8. The method according to claim 7, wherein the dummy protocol data unit comprises the sequence number of the missing service data unit.

9. The method according to claim 8, wherein the dummy protocol data unit comprises only header information and no payload.

10. The method according to one of claims 2 to 9, further comprising the steps of receiving the service data units from an upstream network node of the mobile communication network using an unreliable transport mechanism, and forming the protocol data units by adding header fields to the received service data units.

11. The method according to one of claims 1 to 10, further comprising the step of buffering the service data units for transmission in form of protocol data units.

12. The method according to claim 10, further comprising the step of transferring the service data units not yet successfully transmitted to the mobile terminal to another base station upon handover of the mobile terminal to the other base station.

13. The method according to one of claims 1 to 12, further comprising the step of receiving an indication on the first service data unit expected to be transmitted by the base station after handover of the mobile terminal to the base station from another base station.

14. The method according to claim 13, further comprising the step of detecting at least one missing service data unit within a sequence of service data units to be transmitted to the mobile terminal based on the indication of the first service data unit expected by the mobile terminal after handover.

15. A method for avoiding retransmission requests for missing service data units in a mobile communication system, wherein service data units are transmitted in form of protocol data units by a protocol layer providing the packet retransmission scheme, the method comprising the following steps performed by a mobile terminal:
receiving an indication of at least one missing service data unit from a base station,
utilizing a packet retransmission scheme for receiving the sequence of protocol data units transporting a sequence of service data units from the base station, and
preventing the transmission of a retransmission request for a service data unit if same has been indicated as missing.

16. The method according to claim 15, wherein the packet retransmission scheme utilizes a receiving window indicating a range of sequence numbers of service data units expected to be received by the mobile terminal within a given time period, and
the method further comprises the step of forwarding a sequence of service data units to the next higher protocol layer prior to expiry of said time period, if all service data units missing within a sequence of service data units within the receiving window have been indicated as missing by the base station.

17. The method according to claim 15 or 16, further comprising the step of informing a higher protocol layer on the at least one missing service data unit.

18. The method according to one of claims 15 to 17, further comprising the step of transmitting to another base station an indication of the first service data unit expected to be received by the mobile terminal upon handover from the mobile terminal from the base station to the other base station.

19. The method according to claim 18, wherein the indication of the first service data unit is comprised within a message confirming the handover.

20. The method according to one of claims 1 to 19, wherein the steps are performed by a Radio Link Control protocol layer entity of the base station or mobile terminal.

21. A base station for avoiding retransmission requests for missing service data units in a mobile communication system, wherein service data units are transmitted in form of protocol data units by a protocol layer providing the packet retransmission scheme in a mobile communication system, the base station comprising:
a processor for determining at least one missing service data unit within a sequence of service data units to be transmitted to a mobile terminal in form of protocol data units based on the sequence numbers comprised in the service data units, and
a transmitter informing the mobile terminal on the at least one missing service data unit,
wherein base station is adapted to utilize a packet retransmission scheme for transmitting the sequence of protocol data units to the mobile terminal.

22. The base station according to claim 21, further comprising means adapted to perform the steps of the method according to one of claims 2 to 14.

23. A mobile terminal for avoiding retransmission requests for missing protocol data units in a mobile communication system, wherein service data units are transmitted in form of protocol data units of a protocol layer providing the packet retransmission scheme in a mobile communication system, the mobile terminal comprising:
a receiver for receiving an indication of at least one missing serving data unit from a base station,
wherein the mobile terminal is adapted to utilize a packet retransmission scheme for receiving the sequence of protocol data units conveying a sequence of service data units from the base station, and
a transmitter for transmitting a retransmission request for a service data unit, if same has not been received in at least one protocol data unit from the base station and the service data unit has not been indicated as missing.

24. The mobile terminal according to claim 23, further comprising means adapted to perform the method according to one of claims 16 to 19.

25. A computer readable medium storing instructions that, when executed by the processor of a base station, cause the base station to avoid retransmission requests for missing service data units in a mobile communication system, by:
determining at least one missing service data unit within a sequence of service data units to be transmitted to a mobile terminal in form of protocol data units by a protocol layer providing the packet retransmission scheme based in the sequence numbers comprised in the service data units,
informing the mobile terminal on the at least one missing service data unit, and
utilizing a packet retransmission scheme for transmitting the sequence of service data units in form of packet data units to the mobile terminal.

26. The computer readable medium according to claim 25, further storing instructions that, when executed by the processor of the base station, causes the base station to perform the method according to one of claims 2 to 14.

27. A computer readable medium storing instructions that, when executed by a processor of a mobile terminal, cause the mobile terminal to avoid retransmission requests for missing protocol data units of a protocol layer providing the packet retransmission scheme in a mobile communication system by:
receiving an indication of at least one missing service data unit from a base station,
utilizing a packet retransmission scheme for receiving the sequence of protocol data units transporting a sequence of service data units from the base station, and
preventing the transmission of a retransmission request for a service data unit, if same has been indicated as missing.

28. The computer readable medium according to claim 27, further storing instructions that, when executed by the processor of the mobile terminal, causes the mobile terminal to perform the method according to one of claims 16 to 19.

29. A mobile communication system comprising at least one base station according to claim 21 or 23 and at least one mobile terminal according to claim 23 or 24.

## Patentansprüche

1. Ein Verfahren zum Vermeiden von Sendewiederholungsanfragen für fehlende Servicedateneinheiten in einem Mobilkommunikationssystem, wobei Servicedateneinheiten in Form von Protokolldateneinheiten durch eine Protokollschicht übertragen werden, die ein Packetsendewiederholungsschema bereitstellt, wobei das Verfahren die durch eine Basisstation ausgeführten Schritte umfasst:
Bestimmen wenigstens einer fehlenden Servicedateneinheit innerhalb einer Sequenz von Servicedateneinheiten, die an ein Mobilendgerät in Form von Protokolldateneinheiten übertragen werden sollen, basierend auf den Sequenznummern, die in den Servicedateneinheiten enthalten sind,
Benachrichtigen des Mobilendgerätes bezüglich der wenigstens einen fehlenden Servicedateneinheit, und
Verwenden eines Packetsendewiederholungsschemas zur Übertragung der Sequenz von Servicedateneinheiten an das Mobilendgerät in Form von Protokolldateneinheiten.

2. Das Verfahren gemäß Anspruch 1, wobei die Protokolldateneinheiten, die die Servicedateneinheiten transportieren, die Sequenznummer der Servicedateneinheiten wiederverwenden, die durch eine höhere Protokollschicht bereitgestellt werden um die Reihenfolge der Protokolldateneinheiten in der besagten Sequenz anzuzeigen.

3. Das Verfahren gemäß Anspruch 2, wobei die wiedervenrvendete Sequenznummer der Protokolldateneinheiten die Sequenznummer der Servicedateneinheiten der Packet Data Convergence Protocol Schicht ist.

4. Das Verfahren gemäß einem der Ansprüche 1 bis 3, wobei das Mobilendgerät über die wenigstens eine fehlende Servicedateneinheit benachrichtigt wird indem eine Kontrollprotokolldateneinheit an das Mobilendgerät übertragen wird, die die Sequenznummer von jeder wenigstens einen fehlenden Servicedateneinheit angibt.

5. Das Verfahren gemäß einem der Ansprüche 1 bis 3, wobei das Mobilendgerät über die wenigstens eine fehlende Servicedateneinheit benachrichtigt wird indem in einer Protokolldateneinheit der besagten Sequenz ein Kopffeld für eine fehlende Servicedateneinheit gesetzt wird.

6. Das Verfahren gemäß Anspruch 5, wobei das Kopffeld ein Längenanzeigefeld ist, das eine Nutzdatengröße von Null für die fehlende Servicedateneinheit angibt.

7. Das Verfahren gemäß einem der Ansprüche 1 bis 3, wobei das Mobilendgerät über die wenigstens eine fehlende Servicedateneinheit benachrichtigt wird, indem eine Dummyprotokolldateneinheit für jede fehlende Servicedateneinheit in die Sequenz der Protokolldateneinheiten eingesetzt wird und indem die Dummyprotokolldateneinheit an das Mobilendgerät übertragen wird.

8. Das Verfahren gemäß Anspruch 7, wobei die Dummyprotokolldateneinheit die Sequenznummer der fehlenden Servicedateneinheit umfasst.

9. Das Verfahren gemäß Anspruch 8, wobei die Dummyprotokolldateneinheit nur Kopfinformationen umfasst und keine Nutzdaten.

10. Das Verfahren gemäß einem der Ansprüche 2 bis 9, weiterhin umfassend die Schritte des Empfangens der Servicedateneinheiten von einem stromaufwärts gelegenen Netzwerkknoten des Mobilkommunikationsnetzwerkes, unter Verwendung eines unzuverlässigen Transportmechanismus, und des Bildens von Protokolldateneinheiten indem Kopffelder an die empfangenen Servicedateneinheiten angefügt werden.

11. Das Verfahren gemäß einem der Ansprüche 1 bis 10, weiterhin umfassend den Schritt des Pufferns von Servicedateneinheiten zur Übertragung in Form von Protokolldateneinheiten.

12. Das Verfahren gemäß Anspruch 10, weiterhin umfassend den Schritt des Übertragens der noch nicht an das Mobilendgerät erfolgreich übertragenen Servicedateneinheiten an eine andere Basisstation, nach einer Übergabe des Mobilendgerätes an die andere Basisstation.

13. Das Verfahren gemäß einem der Ansprüche 1 bis 12, weiterhin umfassend den Schritt des Empfangens eines Hinweises über die erste Servicedateneinheit, die durch die Basisstation gesendet werden soll nach der Übergabe des Mobilendgerätes an die Basisstation von einer anderen Basisstation.

14. Das Verfahren gemäß Anspruch 13, weiterhin umfassend den Schritt des Detektierens wenigstens einer fehlenden Servicedateneinheit innerhalb einer Sequenz von Servicedateneinheiten, die an das Mobilendgerät übertragen werden sollen, basierend auf dem Hinweis der ersten Servicedateneinheit, die durch das Mobilendgerät nach der Übergabe erwartet wird.

15. Ein Verfahren zum Vermeiden von Sendewiederholungsanfragen für fehlende Servicedateneinheiten in einem mobilen Kommunikationssystem, wobei Servicedateneinheiten in Form von Protokolldateneinheiten durch eine Protokollschicht übertragen werden, die das Paketsendewiederholungsschema bereitstellt, wobei das Verfahren die durch ein Mobilendgerät durchgeführten Schritte umfasst:
Empfangen eines Hinweises bezüglich wenigstens einer fehlenden Servicedateneinheit von einer Basisstation,
Verwenden eines Paketsendewiederholungsschemas zum Empfangen der Sequenz von Protokolldateneinheiten, die eine Sequenz von Servicedateneinheiten von der Basisstation transportieren, und
Verhindern der Übertragung einer Sendewiederholungsanfrage für eine Servicedateneinheit wenn selbige als fehlend angegeben wurde.

16. Das Verfahren gemäß Anspruch 15, wobei das Paketsendewiederholungsschema ein Empfangsfenster verwendet, das eine Auswahl an Sequenznummern der Servicedateneinheiten angibt, die erwartungsgemäß durch das Mobilendgerät innerhalb einer gegebenen Zeitdauer empfangen werden sollen, und
das Verfahren des Weiteren umfasst den Schritt des Weiterleitens einer Sequenz von Servicedateneinheiten an die nächsthöhere Protokollschicht vor Ablauf der besagten Zeitdauer, wenn alle Servicedateneinheiten, die innerhalb einer Sequenz von Servicedateneinheiten fehlen, innerhalb des Empfangsfensters durch die Basisstation als fehlend **gekennzeichnet** wurden.

17. Das Verfahren gemäß dem Anspruch 15 oder 16, weiterhin umfassend den Schritt des Benachrichtigens einer höheren Protokollschicht über die wenigstens eine fehlende Servicedateneinheit.

18. Das Verfahren gemäß einem der Ansprüche 15 bis 17, weiterhin umfassend den Schritt des Übertragens eines Hinweises über die erste Servicedateneinheit an eine andere Basisstation, die erwartungsgemäß durch das Mobilendgerät nach einer Übergabe des Mobilendgerätes von der Basisstation an die andere Basisstation empfangen werden soll.

19. Das Verfahren gemäß Anspruch 18, wobei der Hinweis über die erste Servicedateneinheit innerhalb einer Nachricht enthalten ist, die die Übergabe bestätigt.

20. Das Verfahren gemäß einem der Ansprüche 1 bis 19, wobei die Schritte durch eine Radio Link Control-Protokollschichteinheit der Basisstation oder des Mobilendgerätes durchgeführt werden.

21. Eine Basisstation zum Vermeiden von Sendewiederholungsanfragen für fehlende Servicedateneinheiten in einem mobilen Kommunikationssystem, wobei Servicedateneinheiten in Form von Protokolldateneinheiten durch eine Protokollschicht übertragen werden, die das Paketsendewiederholungsschema in einem Mobilkommunikationssystem bereitstellt, wobei die Basisstation umfasst:
einen Prozessor zum Bestimmen wenigstens einer fehlenden Servicedateneinheit innerhalb einer Sequenz von Servicedateneinheiten, die an ein Mobilendgerät in Form von Protokolldateneinheiten übertragen werden sollen, basierend auf den Sequenznummern, die in den Servicedateneinheiten enthalten sind, und
einen Übertrager, zum Benachrichtigen des Mobilendgerätes bezüglich der wenigstens einen fehlenden Servicedateneinheit,
wobei die Basisstation angepasst ist, um ein Paketsendewiederholungsschema zum Übertragen der Sequenz von Protokolleinheiten an das Mobilendgerät zu benutzen.

22. Die Basisstation gemäß Anspruch 21, weiterhin umfassend Mittel, die angepasst sind die Schritte des Verfahrens gemäß einem der Ansprüche 2 bis 14 auszuführen.

23. Ein Mobilendgerät zum Vermeiden von Sendewiederholungsanfragen für fehlende Protokolldateneinheiten in einem mobilen Kommunikationssystem, wobei Servicedateneinheiten in Form von Protokolldateneinheiten einer Protokollschicht übertragen werden, die das Paketsendewiederholungsschema in einem Mobilkommunikationssystem bereitstellt, wobei das Mobilendgerät umfasst:
einen Empfänger zum Empfangen eines Hinweises bezüglich wenigstens einer fehlenden Servicedateneinheit von einer Basisstation,
wobei das Mobilendgerät angepasst ist ein Paketsendewiederholungsschema zu verwenden zum Empfangen der Sequenz von Protokolldateneinheiten, die eine Sequenz von Servicedateneinheiten von der Basisstation übermitteln, und
einen Übertrager zum Übertragen einer Sendewiederholungsanfrage für eine Servicedateneinheit, wenn selbige noch nicht in wenigstens einer Protokolldateneinheit von der Basisstation empfangen wurde und die Servicedateneinheit noch nicht als fehlend **gekennzeichnet** wurde.

24. Das Mobilendgerät gemäß Anspruch 23, weiterhin umfassend Mittel, die angepasst sind das Verfahren gemäß einem der Ansprüche 16 bis 19 auszuführen.

25. Ein computerlesbares Medium, das Anweisungen speichert, die, wenn durch einen Prozessor einer Basisstation ausgeführt, die Basisstation veranlassen Sendewiederholungsanfragen für fehlende Servicedateneinheiten in einem Mobilkommunikationssystem zu vermeiden, durch:
Bestimmen wenigstens einer fehlenden Servicedateneinheit innerhalb einer Sequenz von Servicedateneinheiten, die an ein Mobilendgerät in Form von Protokolldateneinheiten übertragen werden sollen, durch eine Protokollschicht, die das Paketsendewiederholungsschema bereitstellt, basierend auf den Sequenznummern, die in den Servicedateneinheiten enthalten sind,
Benachrichtigen des Mobilendgerätes bezüglich der wenigstens einen fehlenden Servicedateneinheit, und
Verwenden eines Paketsendewiederholungsschemas zur Übertragung der Sequenz von Servicedateneinheiten an das Mobilendgerät in Form von Paketdateneinheiten.

26. Das computerlesbare Medium gemäß Anspruch 25, das weiterhin Anweisungen speichert, die, wenn durch den Prozessor der Basisstation ausgeführt, die Basisstation veranlassen das Verfahren gemäß einem der Ansprüche 2 bis 14 auszuführen.

27. Ein computerlesbares Medium, das Anweisungen speichert, die, wenn durch einen Prozessor eines Mobilendgerätes ausgeführt, das Mobilendgerät veranlassen Sendewiederholungsanfragen für fehlende Protokolldateneinheiten einer Protokollschicht zu vermeiden, die das Paketsendewiederholungsschema in einem Mobilkommunikationssystem bereitstellt, durch:
Empfangen eines Hinweises bezüglich wenigstens einer fehlenden Servicedateneinheit von einer Basisstation,
Verwenden eines Paketsendewiederholungsschemas zum Empfangen der Sequenz von Protokolldateneinheiten, die eine Sequenz von Servicedateneinheiten von der Basisstation transportieren, und
Verhindern der Übertragung einer Sendewiederholungsanfrage für eine Servicedateneinheit, wenn selbige als fehlend **gekennzeichnet** wurde.

28. Das computerlesbare Medium gemäß Anspruch 27, das weiterhin Anweisungen speichert, die, wenn durch den Prozessor des Mobilendgerätes ausgeführt, das Mobilendgerät veranlassen das Verfahren gemäß einem der Ansprüche 16 bis 19 auszuführen.

29. Ein Mobilkommunikationssystem umfassend wenigstens eine Basisstation gemäß dem Anspruch 21 oder 23 und wenigstens ein Mobilendgerät gemäß dem Anspruch 23 oder 24.

## Revendications

1. Procédé permettant d'éviter des demandes de retransmission pour des unités manquantes de données de service dans un système de communication mobile, dans lequel des unités de données de service sont transmises sous la forme d'unités de données de protocole par une couche de protocole fournissant un schéma de retransmission de paquets, le procédé comprenant les étapes suivantes, effectuées par une station de base :
- la détermination d'au moins une unité manquante de données de service dans une séquence d'unités de données de service à transmettre à un terminal mobile sous la forme d'unités de données de protocole fondées sur les numéros de séquence compris dans les unités de données de service ;
- l'information du terminal mobile de l'au moins une unité manquante de données de service ; et
- l'utilisation d'un schéma de retransmission de paquets pour transmettre au terminal mobile la séquence d'unités de données de service sous la forme d'unités de données de protocole.

2. Procédé selon la revendication 1, dans lequel les unités de données de protocole transportant les unités de données de service réutilisent le numéro de séquence des unités de données de service fourni par une couche supérieure de protocole pour indiquer l'ordre des unités de données de protocole dans ladite séquence.

3. Procédé selon la revendication 2, dans lequel le numéro de séquence réutilisé des unités de données de protocole est le numéro de séquence d'unités de données de service de la couche de protocole de convergence de données en paquets.

4. Procédé selon l'une des revendications 1 à 3, dans lequel le terminal mobile est informé de l'au moins une unité manquante de données de service en transmettant au terminal mobile une unité de données de protocole de commande indiquant le numéro de séquence de chaque au moins une unité manquante de données de service.

5. Procédé selon l'une des revendications 1 à 3, dans lequel le terminal mobile est informé de l'au moins une unité manquante de données de service en établissant dans une unité de données de protocole de ladite séquence un champ d'en-tête pour une unité manquante de données de service.

6. Procédé selon la revendication 5, dans lequel le champ d'en-tête est un champ indicateur de longueur indiquant une taille de charge utile nulle pour l'unité manquante de données de service.

7. Procédé selon l'une des revendications 1 à 3, dans lequel le terminal mobile est informé de l'au moins une unité manquante de données de service en insérant une unité factice de données de protocole pour chaque unité manquante de données de service dans la séquence d'unités de données de protocole et en transmettant l'unité factice de données de protocole au terminal mobile.

8. Procédé selon la revendication 7, dans lequel l'unité factice de données de protocole comprend le numéro de séquence de l'unité manquante de données de service.

9. Procédé selon la revendication 8, dans lequel l'unité factice de données de protocole ne comprend que des informations d'en-tête et aucune charge utile.

10. Procédé selon l'une des revendications 2 à 9, comprenant en outre les étapes de réception des unités de données de service en provenance d'un noeud de réseau en amont du réseau de communication mobile en utilisant un mécanisme de transport peu fiable, et de formation des unités de données de protocole en ajoutant des champs d'entête aux unités reçues de données de service.

11. Procédé selon l'une des revendications 1 à 10, comprenant en outre l'étape de mise en mémoire tampon des unités de données de service pour leur transmission sous la forme d'unités de données de protocole.

12. Procédé selon la revendication 10, comprenant en outre l'étape de transfert des unités de données de service, non encore transmises avec succès au terminal mobile, à une autre station de base lors d'une passation de communication du terminal mobile à l'autre station de base.

13. Procédé selon l'une des revendications 1 à 12, comprenant en outre l'étape de réception d'une indication sur la première unité de données de service supposée être transmise par la station de base après une passation de communication du terminal mobile à la station de base depuis une autre station de base.

14. Procédé selon la revendication 13, comprenant en outre l'étape de détection d'au moins une unité manquante de données de service dans une séquence d'unités de données de service à transmettre au terminal mobile en fonction de l'indication de la première unité de données de service attendue par le terminal mobile après une passation de communication .

15. Procédé permettant d'éviter des demandes de retransmission pour des unités manquantes de données de service dans un système de communication mobile, dans lequel des unités de données de service sont transmises sous la forme d'unités de données de protocole par une couche de protocole fournissant le schéma de retransmission de paquets, le procédé comprenant les étapes suivantes, effectuées par un terminal mobile :
- la réception d'une indication d'au moins une unité manquante de données de service provenant d'une station de base ;
- l'utilisation d'un schéma de retransmission de paquets pour recevoir la séquence d'unités de données de protocole transportant une séquence d'unités de données de service provenant de la station de base ; et
- la prévention de la transmission d'une demande de retransmission pour une unité de données de service si celle-ci a été indiquée comme étant manquante.

16. Procédé selon la revendication 15, dans lequel le schéma de retransmission de paquets utilise une fenêtre de réception indiquant une plage de numéros de séquence d'unités de données de service supposées être reçues par le terminal mobile dans un intervalle de temps donné ; et
- le procédé comprend en outre l'étape de transmission d'une séquence d'unités de données de service à la couche supérieure suivante de protocole avant l'expiration dudit intervalle de temps, si toutes les unités de données de service manquant dans une séquence d'unités de données de service à l'intérieur de la fenêtre de réception ont été indiquées comme étant manquantes par la station de base.

17. Procédé selon la revendication 15 ou 16, comprenant en outre l'étape d'information d'une couche supérieure de protocole de l'au moins une unité manquante de données de service.

18. Procédé selon l'une des revendications 15 à 17, comprenant en outre l'étape de transmission à une autre station de base d'une indication sur la première unité de données de service supposée être reçue par le terminal mobile lors d'une passation de communication du terminal mobile de la station de base à l'autre station de base.

19. Procédé selon la revendication 18, dans lequel l'indication sur la première unité de données de service est comprise dans un message confirmant la passation de communication.

20. Procédé selon l'une des revendications 1 à 19, dans lequel les étapes sont effectuées par une entité de couche de protocole de commande de liaison radio de la station de base ou du terminal mobile.

21. Station de base permettant d'éviter des demandes de retransmission pour des unités manquantes de données de service dans un système de communication mobile, dans laquelle des unités de données de service sont transmises sous la forme d'unités de données de protocole par une couche de protocole fournissant le schéma de retransmission de paquets dans un système de communication mobile, la station de base comprenant :
- un processeur destiné à déterminer au moins une unité manquante de données de service dans une séquence d'unités de données de service à transmettre à un terminal mobile sous la forme d'unités de données de protocole fondées sur les numéros de séquence compris dans les unités de données de service ; et
- un émetteur informant le terminal mobile de l'au moins une unité manquante de données de service ;
- la station de base étant conçue pour utiliser un schéma de retransmission de paquets pour transmettre la séquence d'unités de données de protocole au terminal mobile.

22. Station de base selon la revendication 21, comprenant en outre un moyen conçu pour exécuter les étapes du procédé selon l'une des revendications 2 à 14.

23. Terminal mobile permettant d'éviter des demandes de retransmission pour des unités manquantes de données de protocole dans un système de communication mobile, dans lequel des unités de données de service sont transmises sous la forme d'unités de données de protocole d'une couche de protocole fournissant le schéma de retransmission de paquets dans un système de communication mobile, le terminal mobile comprenant :
- un récepteur destiné à recevoir une indication sur au moins une unité manquante de données de service provenant d'une station de base ;
- le terminal mobile étant conçu pour utiliser un schéma de retransmission de paquets pour recevoir la séquence d'unités de données de protocole transportant une séquence d'unités de données de service provenant de la station de base ; et
- un émetteur destiné à transmettre une demande de retransmission pour une unité de données de service, si celle-ci n'a pas été reçue dans au moins une unité de données de protocole provenant de la station de base et que l'unité de données de service n'a pas été indiquée comme étant manquante.

24. Terminal mobile selon la revendication 23, comprenant en outre un moyen conçu pour exécuter le procédé selon l'une des revendications 16 à 19.

25. Support pouvant être lu par un ordinateur stockant des instructions qui, lorsqu'elles sont exécutées par le processeur d'une station de base, font en sorte que la station de base évite des demandes de retransmission pour des unités manquantes de données de service dans un système de communication mobile, par :
- la détermination d'au moins une unité manquante de données de service dans une séquence d'unités de données de service à transmettre à un terminal mobile sous la forme d'unités de données de protocole par une couche de protocole fournissant le schéma de retransmission de paquets en fonction des numéros de séquence compris dans les unités de données de service ;
- l'information du terminal mobile de l'au moins une unité manquante de données de service ; et
- l'utilisation d'un schéma de retransmission de paquets pour transmettre au terminal mobile la séquence d'unités de données de service sous la forme d'unités de données en paquets.

26. Support pouvant être lu par un ordinateur selon la revendication 25, stockant en outre des instructions qui, lorsqu'elles sont exécutées par le processeur de la station de base, font en sorte que la station de base mette en oeuvre le procédé selon l'une des revendications 2 à 14.

27. Support pouvant être lu par un ordinateur stockant des instructions qui, lorsqu'elles sont exécutées par un processeur d'un terminal mobile, font en sorte que le terminal mobile évite des demandes de retransmission pour des unités manquantes de données de protocole d'une couche de protocole fournissant le schéma de retransmission de paquets dans un système de communication mobile par :
- la réception d'une indication d'au moins une unité manquante de données de service provenant d'une station de base ;
- l'utilisation d'un schéma de retransmission de paquets pour recevoir la séquence d'unités de données de protocole transportant une séquence d'unités de données de service provenant de la station de base, et
- la prévention de la transmission d'une demande de retransmission pour une unité de données de service, si celle-ci a été indiquée comme étant manquante.

28. Support pouvant être lu par un ordinateur selon la revendication 27, stockant en outre des instructions qui, lorsqu'elles sont exécutées par le processeur du terminal mobile, font en sorte que le terminal mobile mette en oeuvre le procédé selon l'une des revendications 16 à 19.

29. Système de communication mobile comprenant au moins une station de base selon la revendication 21 ou 23 et au moins un terminal mobile selon la revendication 23 ou 24.
